# EUROPÄISCHE PATENTSCHRIFT

(11) **EP 1 232 349 B1**
(45) Veröffentlichungstag und Bekanntmachung des Hinweises auf die Patenterteilung: **22.12.2004**
(21) Anmeldenummer: 00982999.5
(22) Anmeldetag: 11.10.2000
(51) Int. Cl.: F16J 1/16, F16C 33/12, F02F 3/00

(54) **KOLBEN FÜR VERBRENNUNGSMOTOREN**
PISTONS FOR INTERNAL COMBUSTION ENGINES
PISTONS POUR MOTEURS A COMBUSTION

(30) Priorität: 24.11.1999 DE 19956425
(43) Veröffentlichungstag der Anmeldung: 21.08.2002
(73) Patentinhaber: MAHLE GMBH, D-70376 Stuttgart (DE)
(72) Erfinder: ISSLER, Wolfgang, 71409 Schwaikheim (DE)
(86) Internationale Anmeldenummer: PCT/DE2000/003610
(87) Internationale Veröffentlichungsnummer: WO 2001/038760

(56) Entgegenhaltungen:
- WO-A-99/06723
- DE-A- 4 442 884
- US-A- 4 297 975
- US-A- 4 973 068
- US-A- 5 072 092
- PATENT ABSTRACTS OF JAPAN vol. 016, no. 041 (M-1206), 31. Januar 1992 (1992-01-31) & JP 03 246354 A (ATSUGI UNISIA CORP), 1. November 1991 (1991-11-01) in der Anmeldung erwähnt

## Beschreibung

Die Erfindung betrifft ein Verfahren zur Herstellung von Aufrauungen definierter Rauheit in einer Nabenbohrung eines Kolbens für Verbrennungsmotoren oder in einem großen oder einem kleinen pleuelauge eines Pleuels, die lager für den Kolbenbolzen bzw. die Kurbelwelle bilden, wobei die Aufrauungen zumindest an lokalen Bereichen der Nabenbohrung eingebracht werden, siehe z.B. EP-B-740 750, und wobei der Kolben vorzugsweise aus einer AlSi-Legierung besteht.

Bei Kolben sind verschiedene Maßnahmen bekannt, um die Belastung der Nabenbohrungen herabzusetzen, z. B. Entlastungstaschen, ovale Nabenbohrungen oder Formbohrungen und Bombierungen. Ferner ist es aus der EP-B-740 750 bekannt, im Bereich des Nabenzenits in Richtung der Nabenbohrungsachse verlaufende Ausnehmungen mit einer radialen Tiefe von mehr als 0,01 mm vorzusehen, wodurch eine Absenkung des Spannungsniveaus am Kolbenboden erzielt werden soll.

Die genannten Maßnahmen lösen jedoch nicht das insbesondere bei Kolben mit Klemmpleueln auftretende Problem der Nabenreiber.

Aus der JP 3-246354 A ist es auch bekannt, innerhalb der Nabenbohrung unterschiedliche Rauigkeiten einzustellen, indem bei der Herstellung der Nabenbohrung zwei spanformende Schneidwerkzeuge mit leichtem Achsenversatz eingesetzt werden, wodurch die Schmierung verbessert werden soll. Gemäß den Zeichnungen in dieser Schrift soll die Rauigkeit im Nabenzenit geringer sein als im unteren Bereich der Nabe. Die Herstellung der Rauigkeitsverteilung nach dem angegebenen Verfahren erscheint aufwendig und schlecht reproduzierbar.

Aus der FR 2428762 ist es ebenfalls bekannt, innerhalb der Nabenbohrung eine definierte Rauheit einzustellen, um die Ölhaltefähigkeit zu verbessern. Dabei werden beim Läppen der Nabenbohrung durch ein am Läppwerkzeug auskragendes Werkzeug Rillen mit einer Tiefe von vorzugsweise 8-10 Mikrometer erzeugt. Auch dieses Verfahren erscheint vergleichsweise aufwendig.

Die Erfindung beschäftigt sich daher mit dem Problem, bei Kolben für Verbrennungsmotoren auf einfache Weise die Rauigkeit der Kolbenlager so herzustellen, daß in den Nabenbohrungen des Kolbens und in den Pleuellagern Reiber bzw. ein Fressen vermieden werden. Dieses Problem wird gelöst durch die Merkmale des Anspruchs 1. Vorteilhafte Weiterbildungen sind Gegenstand der Unteransprüche.

Durch das zumindest lokale - im Bereich des Nabenzenits - Aufrauen der Lager mit Laserstrahlen wird das Risiko von Reibern gemindert und die Ölhaltefähigkeit verbessert. Die Herstellung einer definierten Rauheit mittels Laserstrahlen ist verglichen mit den bekannten spanformenden Werkzeugen einfach und reproduzierbar.

Da der Laser im Regelfall schräg auf die Bohrung gerichtet werden muß, wird vorzugsweise ein Lasertyp eingesetzt, der gut in den Aluminiumwerkstoff einkoppelt, also eine geringe Reflexion aufweist.

Die durch den Laser hergestellten Profilierungen der Nabenbohrungen weisen eine radiale Formabweichung von ca. 1-50 Mikrometer, vorzugsweise im Bereich von 10 Mikrometer auf, wobei die Rauheit im Regelfall sowohl durch Vertiefungen als auch durch Aufwürfe gebildet ist.

Die Erfindung wird im folgenden anhand einer Zeichnung näher erläutert. Es zeigt:

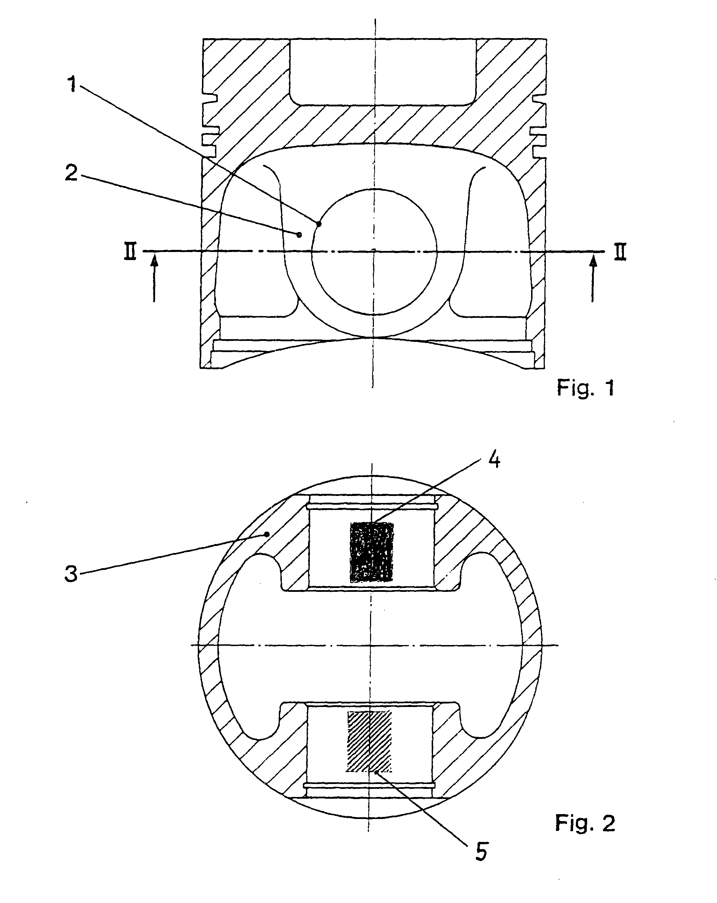

- Fig. 1: einen Längsschnitt durch einen Kolben
- Fig. 2: einen Querschnitt durch einen Kolben auf Höhe der Nabenbohrungen, Ansicht von unten aus Richtung Schaftende.

Der Kolben 3 weist Naben 2 mit Nabenbohrungen 1 auf, die im Bereich des Nabenzenits mittels Laserstrahlen aufgeraut sind. Die aufgerauten Bereiche sind mit 4 bzw. 5 bezeichnet. In der oberen Zeichnungshälfte ist eine flächige Aufrauung 4 dargestellt, in der unteren Zeichnungshälfte wird der aufgeraute Bereich 5 durch mehrere einzelne Laserspuren erzeugt, zwischen denen sich nicht aufgeraute Bereiche befinden.

## Patentansprüche

1. Verfahren zur Herstellung von Aufrauungen definierter Rauheit in einer Nabenbohrung eines Kolbens für Verbrennungsmotoren oder in einem großen oder einem kleinen Pleuelauge eines Pleuels, die Lager für den Kolbenbolzen bzw. die Kurbelwelle bilden, wobei die Aufrauungen zumindest an lokaten Bereichen der Nabenbohrung eingebracht werden
**dadurch gekennzeichnet,**
**daß** die Aufrauungen durch eine Vielzahl von schmalen Laserspuren erzeugt werden und daß zwischen den einzelnen Spuren nicht aufgeraute Bereiche vorliegen.

2. Verfahren nach Anspruch 1,
**dadurch gekennzeichnet,**
**daß** die Aufrauungen innerhalb der Nabenbohrung nur im Bereich des Nabenzenits erzeugt werden.

3. Baueinheit nach Anspruch 2
**dadurch gekennzeichnet,**
**daß** die Aufrauungen einen Winkel von insgesamt mindestens 60° beidseitig des Nabenzenits umfassen.

4. Verfahren nach Anspruch 1,
**dadurch gekennzeichnet,**
**daß** das jeweilige Lager ausgebuchst ist und die Aufrauungen in der dem Kolbenbolzen bzw. der jeweiligen Welle zugewandten Fläche der Buchse liegen.

## Claims

1. Method for producing roughening of defined roughness in a hub bore of a piston for internal -combustion engines, or in a large or a small eye of a connecting rod, which form bearings for the piston pin or the crankshaft, the roughening being made at least in local regions of the hub bore, **characterised in that** the roughening is produced by a large number of narrow laser tracks, and **in that** non-roughened regions are located between the individual tracks.

2. Method according to claim 1, **characterised in that** the roughening within the hub bore is produced only in the zenith region of the hub.

3. Assembly according to claim 2, **characterised in that** the roughening is at a total angle of at least 60° on either side of the hub zenith.

4. Method according to claim 1, **characterised in that** the respective bearing is bushed and the roughening is located in the surface of the bush that faces the piston pin or the respective shaft.

## Revendications

1. Procédé de réalisation d'aspérités d'une rugosité définie dans un alésage de moyeu d'un piston pour moteurs à combustion interne ou dans un oeil, grand ou petit, d'une bielle, qui constituent des paliers pour l'axe de piston ou le vilebrequin, les aspérités étant pratiquées au moins sur des zones locales de l'alésage de moyeu, **caractérisé en ce que** les aspérités sont produites par une multiplicité de traces étroites de laser et que des zones non rendues rugueuses sont présentes entre les traces individuelles.

2. Procédé suivant la revendication 1, **caractérisé en ce que** les aspérités ne sont produites à l'intérieur de l'alésage de moyeu que dans la zone du zénith de moyeu.

3. Unité modulaire suivant la revendication 2, **caractérisée en ce que** les aspérités embrassent un angle d'au moins au total 60° de part et d'autre du zénith de moyeu.

4. Procédé suivant la revendication 1, **caractérisé en ce que** chaque palier est muni d'un coussinet et que les aspérités se situent dans la surface du coussinet tournée vers l'axe de piston ou l'arbre correspondant.
